(19) Europäisches Patentamt
European Patent Office
Office européen des brevets

(11) **EP 2 769 760 A1**

(12) **EUROPÄISCHE PATENTANMELDUNG**

(43) Veröffentlichungstag:
27.08.2014   Patentblatt 2014/35

(51) Int Cl.:
*B01D 53/94* [(2006.01)]     *B01J 23/58* [(2006.01)]
*B01J 23/63* [(2006.01)]     *F01N 3/08* [(2006.01)]

(21) Anmeldenummer: **13156095.5**

(22) Anmeldetag: **21.02.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Umicore AG & Co. KG**
**63457 Hanau-Wolfgang (DE)**

(72) Erfinder:
• **Hoyer, Ruediger**
**63755 Alzenau-Hoerstein (DE)**
• **Schuler, Anke**
**63939 Wörth (DE)**
• **Utschig, Thomas**
**60598 Frankfurt am Main (DE)**
• **Müller, Elena**
**64319 Pfungstadt (DE)**

(54) **Katalysator zur Reduktion von Stickoxiden**

(57)     Die vorliegende Erfindung betrifft einen Stickoxid-Speicherkatalysator aus mindestens zwei katalytisch aktiven Washcoatschichten auf einem Tragköper, wobei eine untere Washcoatschicht A Ceroxid, eine Erdalkaliverbindung und/oder Alkaliverbindung, sowie Platin und/oder Palladium enthält und eine obere Washcoatschicht B, die über der Washcoatschicht A angeordnet ist, Ceroxid, Platin und/oder Palladium und keine Erdalkaliverbindung enthält, sowie ein Verfahren zur Konvertierung von $NO_x$ in Abgasen von Kraftfahrzeugen, die mit mager betriebenen Motoren, betrieben werden.

Figur 1

EP 2 769 760 A1

**Beschreibung**

Die vorliegende Erfindung betrifft einen Katalysator zur Reduktion von Stickoxiden, das im Abgas mager betriebener Verbrennungsmotoren enthalten ist.

Das Abgas von Kraftfahrzeugen, die mit mager betriebenen Verbrennungsmotoren, beispielsweise mit Dieselmotoren, betrieben werden, enthält neben Kohlenmonoxid (CO) und Stickoxiden ($NO_x$) auch Bestandteile, die aus der unvollständigen Verbrennung des Kraftstoffs im Brennraum des Zylinders herrühren. Dazu gehören neben Rest-Kohlenwasserstoffen (HC), die meist ebenfalls überwiegend gasförmig vorliegen, Partikelemissionen, auch als "Dieselruß" oder "Russpartikel" bezeichnet. Dabei handelt es sich um komplexe Agglomerate aus überwiegend Kohlenstoff-haltigen FeststoffTeilchen und einer anhaftenden Flüssigphase, die meist mehrheitlich aus längerkettigen Kohlenwasserstoff-Kondensaten besteht. Die auf den festen Bestandteilen anhaftende Flüssigphase wird auch als "Soluble Organic Fraction SOF" oder "Volatile Organic Fraction VOF" bezeichnet.

Zur Reinigung dieser Abgase müssen die genannten Bestandteile möglichst vollständig in unschädliche Verbindungen umgewandelt werden, was nur unter Einsatz geeigneter Katalysatoren möglich ist.

Zur Entfernung der Stickoxide sind sogenannte Stickoxid-Speicherkatalysatoren, für die auch der Begriff "Lean NOx Trap" oder LNT üblich ist, bekannt. Deren Reinigungswirkung beruht darauf, dass in einer mageren Betriebsphase des Motors die Stickoxide vom Speichermaterial des Speicherkatalysators vorwiegend in Form von Nitraten gespeichert werden und diese in einer darauf folgenden fetten Betriebsphase des Motors wieder zersetzt und die so freiwerdenden Stickoxide mit den reduzierenden Abgasanteilen am Speicherkatalysator zu Stickstoff, Kohlendioxid und Wasser umgesetzt werden. Diese Arbeitsweise ist beispielsweise in der SAE-Schrift SAE 950809 beschrieben.

Als Speichermaterialien kommen insbesondere Oxide, Carbonate oder Hydroxide von Magnesium, Calcium, Strontium, Barium, der Alkalimetalle, der Seltenerdmetalle oder Mischungen davon in Frage. Diese Verbindungen sind aufgrund ihrer basischen Eigenschaften in der Lage, mit den sauren Stickoxiden des Abgases Nitrate zu bilden und sie auf diese Weise abzuspeichern. Sie sind zur Erzeugung einer großen Wechselwirkungsfläche mit dem Abgas in möglichst hoher Dispersion auf geeigneten Trägermaterialien abgeschieden. Stickoxid-Speicherkatalysatoren enthalten darüber hinaus in der Regel Edelmetalle wie Platin, Palladium und/oder Rhodium als katalytisch aktive Komponenten. Deren Aufgabe ist es einerseits, unter mageren Bedingungen NO zu $NO_2$, sowie CO und HC zu $CO_2$ zu oxidieren und andererseits während der fetten Betriebsphasen, in denen der Stickoxid-Speicherkatalysator regeneriert wird, freigesetztes $NO_2$ zu Stickstoff zu reduzieren.

Mit der Veränderung der Abgasgesetzgebung nach Euro 6 werden zukünftige Abgassysteme sowohl bei kalten Temperaturen im Stadtzyklus, als auch bei hohen Temperaturen, wie sie bei hohen Lasten auftreten, ausreichende $NO_x$-Konvertierung aufweisen müssen. Bekannte Stickoxid-Speicherkatalysatoren zeigen aber entweder eine ausgeprägte $NO_x$-Speicherung bei niedrigen oder bei hohen Temperaturen. Eine gute $NO_x$-Konvertierung über einen breiten Temperaturbereich von 200 bis 450°C, die zur Erfüllung künftiger Abgasgesetzgebung unerlässlich ist, kann bisher nicht erreicht werden.

Die EP 0 885 650 A2 beschreibt einen Abgasreinigungskatalysator für Verbrennungsmotoren mit zwei katalytisch aktiven Schichten auf einem Tragkörper. Die auf dem Tragkörper befindliche Schicht umfasst ein oder mehrere hochdisperse Erdalkalioxide, mindestens ein Platingruppenmetall, sowie wenigstens ein feinteiliges, Sauerstoff speicherndes Material. Dabei stehen die Platingruppenmetalle mit allen Bestandteilen der ersten Schicht in enger Berührung. Die zweite Schicht steht mit dem Abgas in direktem Kontakt und enthält mindestens ein Platingruppenmetall, sowie wenigstens ein feinteiliges, Sauerstoff speicherndes Material. Nur ein Teil der feinteiligen Feststoffe der zweiten Schicht dient als Träger für die Platingruppenmetalle.

Aus der US2009/320457 ist ein Stickoxid-Speicherkatalysator bekannt, der zwei übereinander liegende Katalysatorschichten auf einem Trägersubstrat umfasst. Die untere, direkt auf dem Trägersubstrat liegende Schicht umfasst ein oder mehrere Edelmetalle, sowie ein oder mehrere Stickoxid-Speicherkomponenten. Die obere Schicht umfasst ein oder mehrere Edelmetalle, sowie Ceroxid und ist frei von Alkali- oder Erdalkalikomponenten.

Katalysatorsubstrate, die Stickoxid-Speichermaterialien enthalten und zwei oder mehr Schichten aufweisen, sind auch in der WO 2012/029050 beschrieben. Die erste Schicht befindet sich direkt auf dem Trägersubstrat und umfasst Platin und/oder Palladium, während sich die zweite Schicht auf der ersten befindet und Platin umfasst. Beide Schichten enthalten außerdem ein oder mehrere Sauerstoffspeichermaterialien und ein oder mehrere Stickoxid-Speichermaterialien, die ein oder mehrere Alkali- und/oder Erdalkalimetalle umfassen. Die Gesamtmenge an Alkali- und Erdalkalimetall in den Stickoxid-Speichermaterialien beträgt 0,18 bis 2,5 g/in$^3$, berechnet als Alkalimetalloxid $M_2O$ und Erdalkalimetalloxid MO.

Die vorliegende Erfindung betrifft einen Stickoxid-Speicherkatalysator aus mindestens zwei katalytisch aktiven Washcoatschichten auf einem Tragköper,
wobei

- eine untere Washcoatschicht A Ceroxid, eine Erdalkaliverbindung und/oder eine Alkaliverbindung, sowie Platin und/oder Palladium enthält und

- eine obere Washcoatschicht B, die über der Washcoatschicht A angeordnet ist, Ceroxid, sowie Platin und/oder Palladium und keine Erdalkaliverbindung enthält

und wobei die Washcoatschicht B in einer Menge von 50 bis 200g/l , bezogen auf das Volumen des Tragkörpers, vorliegt und der Mindest-Massenanteil in % von Ceroxid in der Washcoatschicht B sich aus der Formel

$$0,1 \times \text{Menge der Washcoatschicht B in g/l} + 30$$

errechnet.

Das in den Washcoatschichten A und B eingesetzte Ceroxid kann handelsüblicher Qualität sein, d.h. einen Ceroxid-Anteil von 90 bis 100 Gew.% aufweisen.

In einer Ausführungsform der vorliegenden Erfindung wird Ceroxid in der Washcoatschicht A in einer Menge von 30 bis 120 g/l, insbesondere 30 bis 80 g/l, eingesetzt.

In der Washcoatschicht B errechnet sich der Mindest-Massenanteil in % von Ceroxid nach oben genannter Formel.

Für eine Washcoatbeladung von 50g/l ergibt sich somit ein Mindest-Massenanteil von Ceroxid von 35%, entsprechend 17,5 g/l bezogen auf das Volumen des Tragkörpers.

Für eine Washcoatbeladung von 200g/l ergibt sich somit ein Mindest-Massenanteil von Ceroxid von 50%, entsprechend 100 g/l bezogen auf das Volumen des Tragkörpers.

In einer Ausführungsform der vorliegenden Erfindung beträgt der Massenanteil von Ceroxid in der Washcoatschicht B mindestens 50%, was je nach Gesamtbeladung von Washcoatschicht B Mengen von mindestens 25 bis 100 g/l, bezogen auf das Volumen des Tragkörpers, entspricht.

In einer weiteren Ausführungsform der vorliegenden Erfindung liegt die Washcoatschicht B in einer Menge von 75 bis 150g/l, bezogen auf das Volumen des Tragkörpers, vor. Dementsprechend betragen in diesem Fall die Ceroxid-Mengen mindestens 28,1 bis 67,5 g/l, jeweils bezogen aus das Volumen des Tragkörpers.

In einer weiteren Ausführungsform der vorliegenden Erfindung liegt die Washcoatschicht B in einer Menge von 80 bis 130g/l, bezogen auf das Volumen des Tragkörpers, vor. Dementsprechend betragen in diesem Fall die Ceroxid-Mengen mindestens 30,4 bis 55,9 g/l, jeweils bezogen aus das Volumen des Tragkörpers.

Die Obergrenze der in Washcoatschicht B enthaltenen Ceroxid-Menge ergibt sich aus der maximalen Washcoatbeladung von 200g/l abzüglich der

Mengen an Edelmetall und den Trägermaterialien für die Edelmetalle, sowie gegebenenfalls enthaltenen weiteren Bestandteilen von Washcoatschicht B. In bevorzugten Ausführungsformen der vorliegenden Erfindung enthält aber Washcoatschicht B außer Ceroxid, Edelmetall und Trägermaterialien für das Edelmetall keine weiteren Bestandteile.

Die maximale Menge Ceroxid, die in Washcoatschicht B enthalten sein kann, kann also in einfacher Weise errechnet werden.

In einer Ausführungsform der vorliegenden Erfindung enthält Washcoatschicht B nicht nur keine Erdalkaliverbindung, sondern auch keine Alkaliverbindung.

Die Washcoatschichten A und B können jeweils Platin oder Palladium enthalten, in bevorzugten Ausführungsformen der vorliegenden Erfindung enthalten sie aber beide Platin und Palladium. Dabei beträgt Verhältnis Platin zu Palladium 1:2 bis 20: 1, insbesondere 1:1 1 bis 10: 1, beispielsweise 1:1, 2:1, 4:1 und 10:1.

In Ausführungsformen der vorliegenden Erfindung enthalten Washcoatschicht A und/oder Washcoatschicht B als weiteres Edelmetall Rhodium. Rhodium liegt in diesem Fall insbesondere in Mengen von 0,1 bis 10 g/ft$^3$ (entspricht 0,003 bis 0,35 g/l), bezogen auf das Volumen des Tragkörpers, vor.

Sowohl in der Washcoatschicht A, als auch in der Washcoatschicht B liegen die Edelmetalle Platin und/oder Palladium und gegebenenfalls Rhodium üblicherweise auf geeigneten Trägermaterialien vor. Als solche werden hochoberflächige, hochschmelzende Oxide verwendet, beispielsweise Aluminiumoxid, Siliziumdioxid, Titandioxid, aber auch Mischoxide wie beispielsweise Cer-Zirkon-Mischoxide.

In Ausführungsformen der vorliegenden Erfindung wird als Trägermaterial für die Edelmetalle Aluminiumoxid verwendet, insbesondere solches, das durch 1 bis 6 Gew.%, insbesondere 4 Gew.-%, Lanthanoxid stabilisiert ist.

Als Erdalkaliverbindung in der Washcoatschicht A kommen insbesondere Oxide, Carbonate oder Hydroxide von Strontium und Barium in Frage, besonders Bariumoxid und Strontiumoxid.

Als Alkaliverbindung in der Washcoatschicht A kommen insbesondere Oxide, Carbonate oder Hydroxide von Lithium, Kalium und Natrium in Frage.

In Ausführungsformen der vorliegenden Erfindung liegt die Erdalkali- bzw, Alkaliverbindung in Mengen von 10 bis 50 g/l, besonders 15 bis 20 g/l, berechnet als Erdalkali- bzw. Alkalioxid, vor.

In einer bevorzugten Ausführungsform betrifft die vorliegende Erfindung einen Stickoxid-Speicherkatalysator aus mindestens zwei katalytisch aktiven Washcoatschichten auf einem Tragköper,
wobei

- eine untere Washcoatschicht A

  o Ceroxid in einer Menge von 30 bis 80 g/l,
  o Platin und Palladium im Verhältnis 10:1, sowie
  o Bariumoxid; enthält und

- eine obere Washcoatschicht B über der unteren Washcoatschicht A angeordnet ist und

  o keine Erdalkaliverbindung und keine Alkaliverbindung,
  o Platin und Palladium im Verhältnis 10:1, sowie
  o Ceroxid in einer Menge von 40 bis 100 g/l

enthält, wobei die Washcoatschicht B in Mengen von 80 bis 130 g/l vorliegt und wobei sich die Mengenangabe g/l jeweils auf das Volumen des Tragkörpers bezieht.

Die Aufbringung der katalytisch aktiven Waschcoatschichten A und B auf den Tragkörper erfolgt nach den üblichen Tauchbeschichtungsverfahren bzw. Pump- und Saug-Beschichtungsverfahren mit sich anschließender thermischer Nachbehandlung (Kalzination und gegebenenfalls Reduktion mit Formiergas oder Wasserstoff). Diese Verfahren sind aus dem Stand der Technik hinreichend bekannt.

Die erfindungsgemäßen Stickoxid-Speicherkatalysatoren eignen sich in hervorragender Weise zur Konvertierung von NOx in Abgasen von Kraftfahrzeugen, die mit mager betriebenen Motoren, etwa Dieselmotoren, betrieben werden. Sie erreichen eine gute NOx-Konvertierung bei Temperaturen von circa 200 bis 450°C, ohne dass NOx-Konvertierung bei hohen Temperaturen negativ beeinflusst wird. Die erfindungsgemäßen Stickoxid-Speicherkatalysatoren sind somit für Euro 6 Anwendungen geeignet.

Die vorliegende Erfindung betrifft somit auch ein Verfahren zur Konvertierung von $NO_x$ in Abgasen von Kraftfahrzeugen, die mit mager betriebenen Motoren, etwa Dieselmotoren, betrieben werden, das dadurch gekennzeichnet ist, dass das Abgas über einen Stickoxid-Speicherkatalysator aus mindestens zwei katalytisch aktiven Waschcoatschichten auf einem Tragköper geleitet wird,
wobei

- eine untere Washcoatschicht A Ceroxid, eine Erdalkaliverbindung und/oder einer Alkaliverbindung, sowie Platin und/oder Palladium enthält und
- eine obere Washcoatschicht B, die über der Washcoatschicht A angeordnet ist, Ceroxid, sowie Platin und/oder Palladium und keine Erdalkaliverbindung enthält

und wobei die Washcoatschicht B in einer Menge von 50 bis 200g/l , bezogen auf das Volumen des Tragkörpers, vorliegt und der Mindest-Massenanteil von Ceroxid in % in der Washcoatschicht B sich aus der Formel

$$0,1 \text{ x Menge der Washcoatschicht B in g/l} + 30$$

errechnet.

Ausgestaltungen des erfindungsgemäßen Verfahrens hinsichtlich des Stickoxid-Speicherkatalysators entsprechen den oben stehenden Beschreibungen.

Die Erfindung wird in den nachstehenden Beispielen und Figuren näher erläutert.

Figur 1: NOx-Konvertierung der Katalysatoren K1, VK1A in Abhängigkeit der Temperatur.
Figur 2: NOx-Konvertierung der Katalysatoren K2 und VK2A in Abhängigkeit von der Temperatur.
Figur 3: Gespeicherte NOx-Masse in den ersten 800s eines NEDC-Fahrzyklus bezogen auf das Katalysatorvolumen in Abhängigkeit der Washcoatbeladung der oberen Washcoatschicht B und dem Ceroxid-Massenanteil in der Washcoatschicht B.

Beispiel 1

Zur Herstellung eines erfindungsgemäßen Katalysators wird ein wabenförmiger Keramikträger mit einer ersten Washcoatschicht A beschichtet, die Pt, Pd und Rh geträgert auf einem Lanthan-stabilisiertem Alumina, Ceroxid in einer Menge 47 g/l, sowie 17 g/l Bariumoxid und 15 g/l Magnesiumoxid enthält. Die Beladung von Pt und Pd beträgt dabei 50 g/cft (1,766 g/l) und 5 g/cft (0,177 g/l) und die Gesamtbeladung der Washcoatschicht 181 g/l bezogen auf das Volumen des Keramik-Trägers. Auf die erste Washcoatschicht wird eine weitere Washcoatschicht B aufgebracht, die ebenfalls Pt und Pd sowie Rh geträgert auf einem Lanthan-stabilisiertem Alumina enthält. Die Beladung von Pt, Pd und Rh in dieser Washcoatschicht beträgt 50 g/cft (1,766 g/l), 5 g/cft (0,177 g/l) und 5 g/cft (0,177 g/l). Die Washcoatschicht B enthält außerdem 93 g/l Ceroxid bei einer Washcoatbeladung der Schicht B von 181 g/l.

Der so erhaltene Katalysator wird nachstehend K1 genannt.

Vergleichsbeispiele 1a bis 1c

Die Vergleichsbeispiele 1a bis 1c unterscheiden sich von Beispiel 1 dadurch, dass die Mengen an Ceroxid in Washcoatschicht A und B variiert sind bei einer konstanten Gesamt-Ceroxidmenge von 140 g/l und konstanter Washcoat-Beladung der Washcoatschicht A und B. Die Ceroxid-Aufteilung der Vergleichsbeispiele 1a bis 1c ergeben sich aus nachfolgender Tabelle 1. Die so erhaltenen Katalysatoren werden nachstehend VK1A, VK1B bzw. VK1C genannt.

Beispiel 2

Beispiel 2 unterscheidet sich von den vorangegangenen Beispielen dadurch, dass die untere Washcoatschicht A eine Washcoatbeladung von 300 g/l und eine Ceroxid-Menge von 116 g/l aufweist. Dagegen hat die obere Washcoatschicht B eine Washcoatbeladung von 62 g/l und eine Ceroxid-Beladung von 24 g/l. Dies entspricht einem Ceroxid-Anteil in der Washcoatschicht B von 39%.

Der so erhaltene Katalysator wird nachstehend K2 genannt.

Vergleichsbeispiele 2a bis 2c

Die Vergleichsbeispiele 2a bis 2c unterscheiden sich von Beispiel 2 dadurch, dass Washcoatbeladungen der Washcoatschichten A und B variiert sind, wobei die Gesamt-Washcoatbeladungen beider Schichten konstant 362 g/l beträgt. Ebenso ist die Ceroxid-Anteil in der Washcoatschicht B konstant bei 39% und die Gesamt-Ceroxide-Menge konstant bei 140 g/l bezogen auf das Katalysatorvolumen. Die Washcoatbeladungen der Washcoatschicht B und die Ceroxid-Mengen in den Washcoatschichten A und B ergeben sich aus nachfolgender Tabelle 1.

Die so erhaltenen Katalysatoren werden nachstehend VK2A, VK2B bzw. VK2C genannt.

Beispiel 3:

Beispiel 3 unterscheidet sich von den vorangegangenen Beispielen dadurch, dass untere Washcoatschicht A eine Washcoatbeladung von 235 g/l und eine Ceroxid-Menge von 65 g/l aufweist. Dagegen hat die obere Washcoatschicht B eine Washcoatbeladung von 127 g/l und eine Ceroxid-Beladung von 75 g/l. Dies entspricht einem Ceroxid-Anteil in der Washcoatschicht B von 75%.

Der so erhaltene Katalysator wird nachstehend K2 genannt.

Vor der Durchführung von Vergleichsversuchen wurden alle Katalystoren 16h bei 750°C unter wechselnder fett/mager Atmosphäre gealtert. Dabei dauerte jede fett-Phase 60s und enthielt 4 vol% CO, während die mager-Phase ebenfalls 60 s dauerte und 10vol% $O_2$ enthielt. Während der gesamten Alterung wurden zusätzlich 10vol% $H_2O$ dosiert.

In der US2009/320457 wird in Figur 8 gezeigt, dass Beispiel-Katalysator 1 im Vergleich zu einem Katalysator A eine verbesserte NOx-Konvertierung bei Temperaturen < 300°C aufweist, dagegen bei T > 350°C schlechtere Konvertierung zeigt. Beispiel-Katalysator 1 weist zwei Washcoatschichten auf, wobei die erste Schicht eine Washcoatbeladung von 1,7 g/in$^3$ (104 g/l) und die zweite Schicht eine Washcoatbeladung von 2,6 g/in$^3$ (159 g/l) hat. Über die Ceroxid-Menge in der zweiten Washcoatschicht sind keine klaren Angaben gemacht.

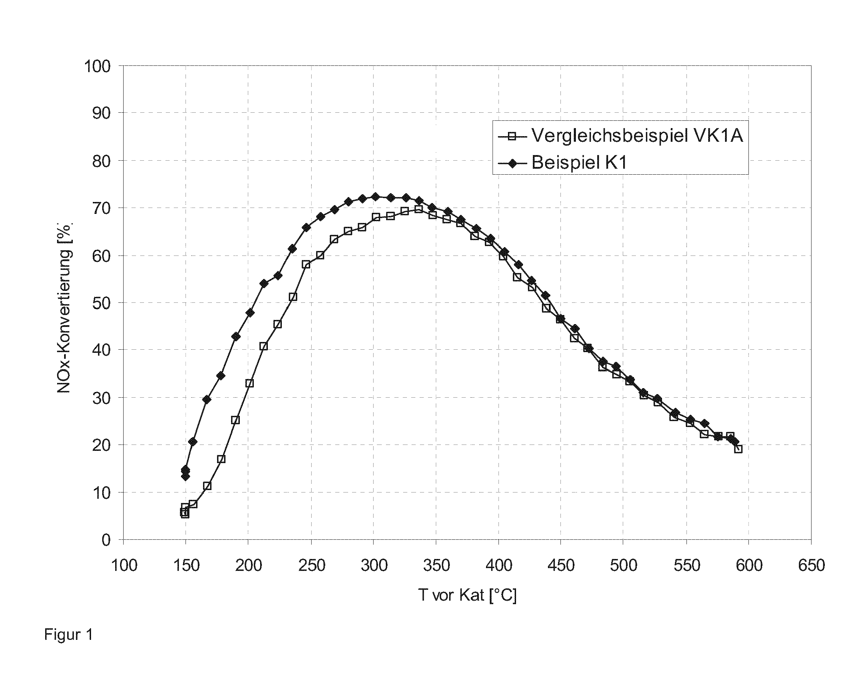

In Figur 1 ist die NOx-Konvertierung des erfindungsgemäßen Katalysators K1 und des Vergleichskatalysators VK1A in Abhängigkeit von der Temperatur vor dem Katalysator in einem Modellgasreaktor gezeigt. Dabei wird, während die Temperatur von 600°C auf 150°C mit 7,5°C pro Minute abgesenkt wird, der Katalysator abwechselnd für 80s mit "magerem" Abgas und für 10s mit "fettem" Abgas beaufschlagt. Während des Testes wird konstant 500 ppm NO und 33 ppm Propen sowie 17 ppm Propan dosiert. Der Vergleich der Katalysatoren K1 und VK1A in Figur 1 zeigt, dass der erfindungsgemäße Katalysator K1 eine verbesserte NOx-Konvertierung bei Temperaturen < 350°C aufweist, während die NOx-Konvertierung bei höheren Temperaturen gleich geblieben ist.

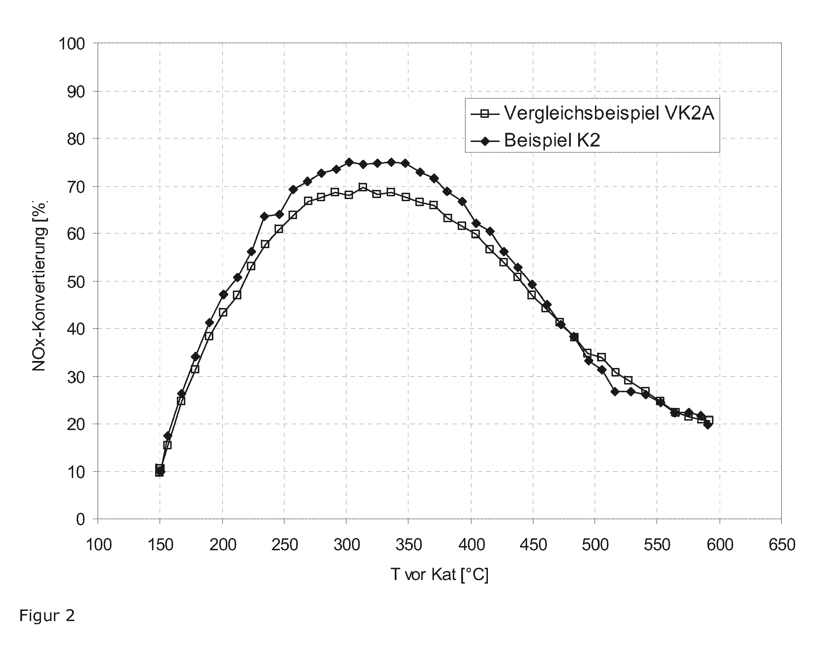

In Figur 2 ist die NOx-Konvertierung des erfindungsgemäßen Katalysators K2 und des Vergleichskatalysators VK2A von der Temperatur vor dem Katalysator gemessen nach derselben Prozedur wie in Figur 1 dargestellt. Dabei zeigt sich, dass durch Verringerung der Washcoatbeladung der Washcoatschicht B bei gleich bleibenden Ceroxid-Anteil die NOx-Konvertierung gesteigert werden kann.

Tabelle 1 zeigt die Zusammenfassung aller Katalysatoren. Zusätzlich ist die gespeicherte NOx-Menge bezogen auf das Katalysatorvolumen in den ersten 800s eines NEDC-Fahrzyklus gezeigt. Dazu wird das Abgas eines typischen Euro 6 Diesel-Motors in einem Modellgasreaktor simuliert und über die Katalysatorprobe geleitet. Die ersten 800s des NEDC-Zyklus zeigen das NOx-Einspeicherverhalten bei Temperaturen < 200°C. Um die Euro 6 Abgasnorm zu erfüllen, ist es dabei besonders wichtig in diesem Bereich eine hohe NOx-Speicherkapazität zu zeigen. Die Werte für die eingespeicherte NOx-Masse in Tabelle 1 zeigen, dass nur bei den erfindungsgemäßen Beispielen die Speicherkapazität > 850 mg/l bezogen auf das Katalysatorvolumen beträgt.

Tabelle 1

| Katalysator | Ceroxid Washcoat A [g/l] | Ceroxid Washcoat B [g/l] | Ceroxid-Massenanteil B [%] | Washcoat-beladung B [g/l] | Gespeicherte NOx-Menge [g/l] |
|---|---|---|---|---|---|
| VK1A | 116 | 24 | 13 | 181 | 732 |
| VK1B | 93 | 47 | 26 | 181 | 746 |
| VK1C | 70 | 70 | 39 | 181 | 777 |
| K1 | 47 | 93 | 52 | 181 | 868 |
| VK2A | 47 | 93 | 39 | 241 | 796 |
| VK2B | 70 | 70 | 39 | 181 | 809 |
| VK2C | 93 | 47 | 39 | 121 | 850 |
| K2 | 116 | 24 | 39 | 62 | 860 |
| K3 | 65 | 75 | 59 | 127 | 870 |

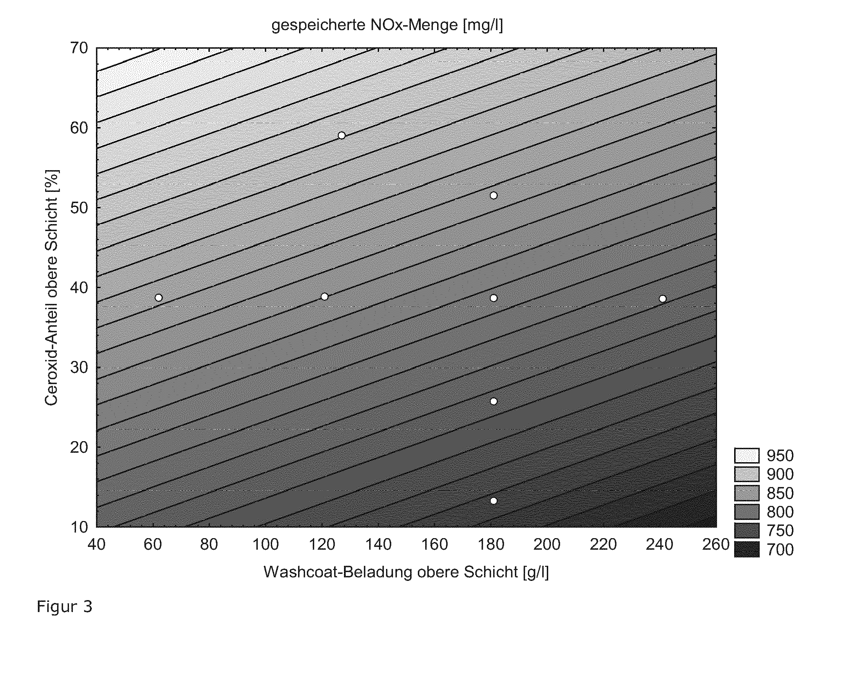

In Figur 3 ist der Zusammenhang zwischen der eingespeicherten NOx-Menge in den ersten 800s eines NEDC-Fahrzyklus und der Washcoatbeladung der Washcoatschicht B sowie dem Ceroxid-Anteil in dieser gezeigt. Die Punkte oberhalb der schwarzen Linie entsprechen den erfindungsgemäßen Beispielen mit ausreichenden NOx-Speichereigenschaften. Der Ceroxid-Anteil in der Washcoatschicht B muss daher mindestes dem mit folgender Formel berechnetem Anteil entsprechen: Mindest-Ceroxid-Anteil in der Washcoatschicht B [%] = 0,1 x Washcoatbeladung B [g/l] + 30.

## Patentansprüche

1. Stickoxid-Speicherkatalysator aus mindestens zwei katalytisch aktiven Washcoatschichten auf einem Tragköper, wobei

   - eine untere Washcoatschicht A Ceroxid, eine Erdalkaliverbindung und/oder eine Alkaliverbindung, sowie Platin und/oder Palladium enthält und
   - eine obere Washcoatschicht B, die über der Washcoatschicht A angeordnet ist, Ceroxid, sowie Platin und/oder Palladium und keine Erdalkaliverbindung enthält

   und wobei die Washcoatschicht B in einer Menge von 50 bis 200g/l , bezogen auf das Volumen des Tragkörpers, vorliegt und der Mindest-Massenanteil in % von Ceroxid in der Washcoatschicht B sich aus der Formel

$$0,1 \text{ x Menge der Washcoatschicht B in g/l} + 30$$

   errechnet.

2. Stickoxid-Speicherkatalysator nach Anspruch 1, **dadurch gekennzeichnet, dass** die Washcoatschicht A Ceroxid in einer Menge von 30 bis 100 g/l enthält.

3. Stickoxid-Speicherkatalysator nach Anspruch 1 und/oder 2, **dadurch gekennzeichnet**, die Washcoatschicht B in einer Menge von 80 bis 130 g/l, bezogen auf das Volumen des Tragkörpers, vorliegt.

4. Stickoxid-Speicherkatalysator nach einem oder mehreren der Ansprüche 1 bis 3, **dadurch gekennzeichnet, dass** der Massenanteil von Ceroxid in der Washcoatschicht B mindestens 50% beträgt.

5. Stickoxid-Speicherkatalysator nach einem oder mehreren der Ansprüche 1 bis 4, **dadurch gekennzeichnet, dass** die Washcoatschicht B keine Alkaliverbindung enthält.

6. Stickoxid-Speicherkatalysator nach einem oder mehreren der Ansprüche 1 bis 5, **dadurch gekennzeichnet, dass** die Washcoatschicht A und die Washcoatschicht B jeweils Platin und Palladium enthält.

7. Stickoxid-Speicherkatalysator nach Anspruch 6, **dadurch gekennzeichnet, dass** das Verhältnis Platin zu Palladium 1:2 bis 20:1 beträgt.

8. Stickoxid-Speicherkatalysator nach einem oder mehreren der Ansprüche 1 bis 7, **dadurch gekennzeichnet, dass** die Washcoatschicht A Erdalkaliverbindung und/oder Alkaliverbindung in Mengen von 10 bis 50 g/l, bezogen auf das Volumen des Tragkörpers, enthält.

9. Stickoxid-Speicherkatalysator nach einem oder mehreren der Ansprüche 1 bis 8, **dadurch gekennzeichnet, dass** die Erdalkaliverbindung in Washcoatschicht A Bariumoxid oder Strontiumoxid ist.

10. Stickoxid-Speicherkatalysator nach einem oder mehreren der Ansprüche 1 bis 9, **dadurch gekennzeichnet, dass** er

- eine untere Washcoatschicht A, die

  o Ceroxid in einer Menge von 30 bis 80 g/l,
  o Platin und Palladium im Verhältnis 10:1, sowie
  o Bariumoxid; enthält und

- eine obere Washcoatschicht B über der unteren Washcoatschicht A angeordnet ist, die

  o keine Erdalkaliverbindung und keine Alkaliverbindung,
  o Platin und Palladium im Verhältnis 10:1, sowie
  o Ceroxid in einer Menge von 40 bis 100 g/l enthält

umfasst, wobei die Washcoatschicht B in Mengen von 80 bis 130 g/l vorliegt und wobei sich die Mengenangabe g/l jeweils auf das Volumen des Tragkörpers bezieht.

11. Verfahren zur Konvertierung von $NO_x$ in Abgasen von Kraftfahrzeugen, die mit mager betriebenen Motoren betrieben werden, **dadurch gekennzeichnet, dass** das Abgas über einen Stickoxid-Speicherkatalysator aus mindestens zwei katalytisch aktiven Washcoatschichten auf einem Tragköper geleitet wird, wobei

- eine untere Washcoatschicht A Ceroxid, eine Erdalkaliverbindung und/oder eine Alkaliverbindung, sowie Platin und/oder Palladium enthält und
- eine obere Washcoatschicht B, die über der Washcoatschicht A angeordnet ist, Ceroxid, sowie Platin und/oder Palladium und keine Erdalkaliverbindung enthält,

und wobei die Washcoatschicht B in einer Menge von 50 bis 200g/l , bezogen auf das Volumen des Tragkörpers, vorliegt und der Mindest-Massenanteil in % von Ceroxid in der Washcoatschicht B sich aus der Formel

$$0,1 \times \text{Menge der Washcoatschicht B in g/l} + 30$$

errechnet.

Figur 1

Figur 2

Figur 3

Europäisches Patentamt

European Patent Office

Office européen des brevets

**EUROPÄISCHER RECHERCHENBERICHT**

Nummer der Anmeldung

EP 13 15 6095

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 0 885 650 A2 (DEGUSSA [DE] UMICORE AG & CO KG [DE]) 23. Dezember 1998 (1998-12-23) * Seiten 4,5,6; Ansprüche; Beispiele * ----- | 1 | INV. B01D53/94 B01J23/58 B01J23/63 F01N3/08 |
| A | WO 2012/085564 A1 (JOHNSON MATTHEY PLC [GB]; BRISLEY ROBERT JAMES [GB]; CAMM KENNETH DAVI) 28. Juni 2012 (2012-06-28) * Seiten 7,8; Ansprüche; Beispiel 1 * ----- | 1,11 | |
| A | EP 2 404 669 A1 (ICT CO LTD [JP]; INT CATALYST TECHNOLOGY INC [US]) 11. Januar 2012 (2012-01-11) * Ansprüche * ----- | 1,11 | |
| A | EP 0 764 459 A2 (FORD MOTOR CO [GB]; FORD WERKE AG [DE]; FORD FRANCE [FR] FORD MOTOR CO) 26. März 1997 (1997-03-26) * Ansprüche * ----- | 1,11 | |
| A,D | US 2009/320457 A1 (WAN CHUNG Z [US]) 31. Dezember 2009 (2009-12-31) ----- | 1,11 | RECHERCHIERTE SACHGEBIETE (IPC) |
| A,D | WO 2012/029050 A1 (BASF SE [DE]; BASF CHINA CO LTD [CN]; HILGENDORFF MARCUS [DE]) 8. März 2012 (2012-03-08) ----- | 1,11 | B01D B01J F01N |

Der vorliegende Recherchenbericht wurde für alle Patentansprüche erstellt

| Recherchenort | Abschlußdatum der Recherche | Prüfer |
|---|---|---|
| München | 4. September 2013 | Polesak, Helmut |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 2 769 760 A1

**ANHANG ZUM EUROPÄISCHEN RECHERCHENBERICHT**
**ÜBER DIE EUROPÄISCHE PATENTANMELDUNG NR.**　　　EP 13 15 6095

| Im Recherchenbericht angeführtes Patentdokument | | Datum der Veröffentlichung | Mitglied(er) der Patentfamilie | | Datum der Veröffentlichung |
|---|---|---|---|---|---|
| EP 0885650 | A2 | 23-12-1998 | AR | 013112 A1 | 13-12-2000 |
| | | | BR | 9802036 A | 21-12-1999 |
| | | | DE | 19726322 A1 | 24-12-1998 |
| | | | EP | 0885650 A2 | 23-12-1998 |
| | | | JP | 4056629 B2 | 05-03-2008 |
| | | | JP | H1170332 A | 16-03-1999 |
| WO 2012085564 | A1 | 28-06-2012 | KEINE | | |
| EP 2404669 | A1 | 11-01-2012 | CA | 2754405 A1 | 10-09-2010 |
| | | | CN | 102341174 A | 01-02-2012 |
| | | | EP | 2404669 A1 | 11-01-2012 |
| | | | KR | 20110129381 A | 01-12-2011 |
| | | | US | 2012027654 A1 | 02-02-2012 |
| | | | WO | 2010101219 A1 | 10-09-2010 |
| EP 0764459 | A2 | 26-03-1997 | DE | 69616225 D1 | 29-11-2001 |
| | | | DE | 69616225 T2 | 18-04-2002 |
| | | | EP | 0764459 A2 | 26-03-1997 |
| | | | JP | H09103676 A | 22-04-1997 |
| | | | US | 5750082 A | 12-05-1998 |
| US 2009320457 | A1 | 31-12-2009 | AR | 072401 A1 | 25-08-2010 |
| | | | CA | 2729241 A1 | 30-12-2009 |
| | | | CN | 102089066 A | 08-06-2011 |
| | | | EP | 2303434 A1 | 06-04-2011 |
| | | | JP | 2011526203 A | 06-10-2011 |
| | | | KR | 20110025848 A | 11-03-2011 |
| | | | US | 2009320457 A1 | 31-12-2009 |
| | | | WO | 2009158453 A1 | 30-12-2009 |
| WO 2012029050 | A1 | 08-03-2012 | CN | 103189138 A | 03-07-2013 |
| | | | EP | 2611535 A1 | 10-07-2013 |
| | | | WO | 2012029050 A1 | 08-03-2012 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0885650 A2
- US 2009320457 A
- WO 2012029050 A